Europäisches Patentamt

European Patent Office

Office européen des brevets

(19)

(11) **EP 0 638 471 B1**

(12) **EUROPÄISCHE PATENTSCHRIFT**

(45) Veröffentlichungstag und Bekanntmachung des Hinweises auf die Patenterteilung:
**21.05.1997 Patentblatt 1997/21**

(51) Int. Cl.$^6$: **B62D 9/00**, E02F 9/02, E02F 3/76

(21) Anmeldenummer: **94112512.2**

(22) Anmeldetag: **10.08.1994**

(54) **Baufahrzeug**

Construction machine

Machine de construction

(84) Benannte Vertragsstaaten:
**AT CH DE ES FR GB IT LI NL SE**

(30) Priorität: **10.08.1993 DE 4326750**
**21.09.1993 DE 4331956**

(43) Veröffentlichungstag der Anmeldung:
**15.02.1995 Patentblatt 1995/07**

(73) Patentinhaber: **KARL SCHAEFF GMBH & CO.**
**MASCHINENFABRIK**
**D-74595 Langenburg (DE)**

(72) Erfinder: **Schaeff, Hans**
**D-74595 Langenburg (DE)**

(74) Vertreter: **Raeck, Wilfrid, Dipl.-Ing.**
**Moserstrasse 8**
**70182 Stuttgart (DE)**

(56) Entgegenhaltungen:
**DE-A- 2 026 481          GB-A- 1 230 302**

• **PATENT ABSTRACTS OF JAPAN vol. 15, no. 239**
**(M-1126) 20. Juni 1991 & JP-A-03 076 935**
**(KUBOTA CORP) 2. April 1991**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Baufahrzeug mit einem einheitlichen Fahrzeugrahmen und zwei Radachsen, von denen mindestens die eine achsschenkelgelenkte Räder aufweist, und mit einem auf dem Rahmen im Bereich der anderen Radachse abgestützten Arbeitsgerät, z.B. Ladegestell für eine mit einem Ladewerkzeug versehene Hubschwinge oder Traggestell für die Auslegerkonsole eines Heckbaggers.

Mit Allradlenkung versehene Baufahrzeuge der vorbeschriebenen Art zeichnen sich sowohl durch große Wendigkeit und Manövrierfähigkeit auf engem Raum, als auch durch gute Standsicherheit aus, da die bei Lastaufnahme durch das Arbeitsgerät, z.B. eine Ladeschaufel entstehenden Kräfte symmetrisch in den starren Fahrzeugrahmen eingeleitet und von dort über die Vierpunktauflage der Räder abgestützt werden. Mit dem vorn über den Fahrzeugrahmen überstehenden Arbeitsgerät, z.B. mit einer Ladeeinrichtung, können allerdings in eingelenktem Zustand der Vorderräder beim Aufnehmen von Schüttgut oder Abreißen einer Wand nur relativ geringe Schub- bzw. Zugkräfte ausgeübt werden, weil der von den Vorderrädern erzeugte Vortrieb in eine andere Richtung wirkt als die von einer Ladeschaufel auszuübenden Kräfte. Außerdem beschreibt die in festliegendem Querverlauf zur Längsrichtung des Fahrzeugrahmens verbleibende Vorderkante eines Arbeitsgerätes während des Lenkbetriebes eine weite Hüllkurve, die mit relativ großem Abstand jenseits der von den eigentlichen Fahrzeugbegrenzungen beschriebenen Hüllkurve verläuft. Dies erfordert eine ständige Aufmerksamkeit des Geräteführers, der bei Kurvenfahrten sorgfältig darauf achten muß, daß das überstehende Werkzeug oder Arbeitsgerät nicht mit außerhalb des Fahrweges stehenden Wänden oder Hindernissen kollidiert.

Der Erfindung liegt die Aufgabe zugrunde, ein Baufahrzeug der eingangs bezeichneten Art zu schaffen, das während des Arbeitseinsatzes unter Aufrechterhaltung seiner guten Standsicherheit auch in voll eingelenktem Zustand der Räder mit seinem Arbeitsgerät große Schub- oder Zugkräfte ausübt und bei Kurvenfahrt mit dem Arbeitsgerät nur eine enge Hüllkurve beschreibt.

Diese Aufgabe wird erfindungsgemäß durch die kennzeichnenden Merkmale des Patentanspruches 1 gelöst.

Die vorgeschlagene Bauweise erhöht den Bedienungskomfort, weil der Fahrzeugführer bei Straßenfahrten oder beim Arbeitseinsatz lediglich die Radlenkung zu betätigen braucht und dadurch bereits das Ladegestell mit der über die Hubschwinge angeschlossenen Ladeeinrichtung automatisch in die durch den Lenkeinschlagwinkel der Vorderräder bestimmte Fahrtrichtung eingestellt wird. Die Vorderräder des Fahrzeuges folgen somit bei Kurvenfahrten dem über den Fahrzeugrahmen hinausragenden, auf die Zielrichtung eingestellten Arbeitsgerät, so daß enge Kurven, die durch Wände oder andere seitliche Hindernisse beengt sind, ohne zusätzliche Aufmerksamkeit problemlos durchfahren werden. Darüber hinaus werden durch das Nachführen des Arbeitsgerätes zum jeweiligen Lenkeinschlagwinkel vergrößerte Reichweiten und bei Arbeiten mit einem Schaufellader optimale Schubeigenschaften erreicht, da die vom Fahrzeugantrieb verfügbare Vortriebskraft bestmöglich auf die Schaufelschneide übertragen wird.

Kopplungsmittel für die Verstellbewegungen der Räder und des Arbeitsgerätes können aus einer hydraulischen Folgesteuerung zwischen einem Servo-Verstellzylinder der Lenkeinrichtung und einem hydraulischen Schwenkantrieb des Arbeitsgerätes bestehen. Bei einer von der Antriebsart der Verstellbewegungen unabhängigen Kopplung können an der Lenkeinrichtung sowie am Arbeitsgerät angeordnete elektrische Wegaufnehmer sowie durch die von den Wegaufnehmern ermittelte Signaldifferenz betätigbare elektrohydraulische Ventilmittel zum Ausgleich der Schwenk- bzw. Lenkeinschlagwinkel jeweils bis zur Synchronstellung vorgesehen sein.

Nach einer besonderen Ausgestaltung der Erfindung bestehen die Kopplungsmittel aus einer festen Verbindung zwischen dem Arbeitsgerät und der an einem Fahrzeugrahmenende angeordneten, nicht-lenkbare Räder tragende anderen Radachse. Aufgrund dieser Verbindung verläuft die senkrechte Schwenkachse durch den Schnittpunkt der Längsmitte des Fahrzeugrahmens und der Mittellinie der Radachse, so daß der Schwenkantrieb des Arbeitsgerätes gleichzeitig die Lenkeinrichtung der Radachse bzw. und umgekehrt bildet. Bei dieser erfindungsgemäßen Ausgestaltung des Baufahrzeuges besteht die andere Radachse aus einer baulich einfachen und somit preiswerten Starrachse mit nicht-lenkbaren Rädern. Als weiterer Vorteil ist die Starrachse gleichzeitig um die senkrechte Schwenkachse des Arbeitsgerätes zusammen mit diesem verschwenkbar und damit ähnlich einfach wie bei einer Knicklenkung lenkbar, so daß der Aufwand einer vom Arbeitsgerät unabhängigen Radlenkung entfällt.

Bei einer Ausführungsform wird die starre Radachse mit einem am Arbeitsgerät integralen Anschlußrahmen fest verbunden, der mittels eines oberen und unteren Abschnittes auf einem am Fahrzeugrahmenende angeordneten Knickbolzen gelagert ist, der die senkrechte Schwenkachse bildet.

Anstelle eines einteilig ausgeführten Knickbolzens sieht eine bevorzugte Ausführungsform vor, daß die Radachse innerhalb eines senkrechten Abstandes zwischen oberen und unteren waagerechten Endteilen des Fahrzeugrahmens angeordnet ist, die einen oberen bzw. unteren Knickbolzen zur Lagerung der oberen und unteren Abschnitte des Anschlußrahmens tragen. Bei diesem Vorschlag ist der Knickbolzen in einen oberen und einen unteren Abschnitt aufgeteilt und seine Lagerung um die Radachse bzw. um deren mittleren Differentialgetriebe herumgebaut, wobei aufgrund des Abstandes zwischen dem oberen und unteren Knickbolzen die aus dem Arbeitsgerät übertragenen Kräfte günstig in den Fahrzeugrahmen übertragen werden.

Wenn das über seinem Anschlußrahmen mit der Starrachse fest verbundene Arbeitsgerät aus einem Heckbagger besteht, kann dessen normalerweise maximal 180° betragender Schwenkbereich um den Lenkwinkel nach links oder rechts einfach durch Einlenken der Räder vergrößert werden, womit vorteilhaft erweiterte Einzugs- und Entladebereiche entstehen und außerdem die Manövrierbarkeit des Baufahrzeuges auf beengten Fahrwegen verbessert wird.

Gemäß einer anderen Ausgestaltung des erfindungsgemäßen Baufahrzeuges ist die andere Radachse mit einem am Arbeitsgerät integralen Anschlußrahmen fest verbunden, der nach oben mittels eines die senkrechte Schwenkachse enthaltenden ringförmigen Drehlagers an den Fahrzeugrahmen angeschlossen ist. Somit ist der Fahrzeugrahmen über das Drehlager auf der mit dem Anschlußrahmen fest bzw. einheitlich verbundenen Starrachse abgestützt.

Zweckmäßig weist der Anschlußrahmen auf einem in seiner Breite mindestens dem Durchmesser des Drehlagers entsprechenden Abschnitt untere Befestigungsmittel für die andere Radachse auf und trägt an einem über das Ende des Fahrzeugrahmens vorstehenden Abschnitt das Arbeitsgerät, z.B. das Traggestell für die Auslegerkonsole eines Heckbaggers.

Weitere Merkmale und Vorteile des Baufahrzeuges mit lenkgesteuertem Arbeitsgerät nach der Erfindung ergeben sich aus den Ansprüchen sowie aus der nachfolgenden Beschreibung gezeichneter Ausführungsbeispiele. In den weitgehend schematischen Zeichnungen ist

Fig. 1             eine Draufsicht auf einen bekannten Knicklader bei Geradeausfahrt bzw. eingelenktem Zustand,

Fig. 2             eine Draufsicht auf einen bekannten als Allradlenker ausgeführten Schaufellader,

Fig. 3 und 4       Drauf- bzw. Seitenansichten eines Baufahrzeuges gemäß einer Ausführungsform der Erfindung,

Fig. 5             ein Prinzip-Beispiel einer hydraulischen Kopplung nach der Erfindung zwischen einer Rad-Lenkeinrichtung und einer synchron angetriebenen Arbeitsgerät-Schwenkeinrichtung,

Fig. 6 und 7       Drauf- bzw. Seitenansichten einer Variante des in Fig. 3 bzw. 4 gezeigten Baufahrzeuges,

Fig. 8             ein Prinzip-Beispiel einer elektrohydraulischen Kopplung zwischen Rad-Lenkeinrichtung und Arbeitsgerät-Schwenkeinrichtung,

Fig. 9 und 10      Drauf- bzw. Seitenansichten einer bevorzugten Ausführungsform einer erfindungsgemäßen Kopplung zwischen Lenkeinrichtung und Schwenkantrieb bei einem Baufahrzeug,

Fig. 11 und 12     teilweise geschnittene Seiten- und Frontansichten einer Starrachse, die um die senkrechte Schwenkachse des Arbeitsgerätes einstellbar ist,

Fig. 13            eine Draufsicht auf einen Baggerlader nach der Erfindung, bei dem Heckbagger und Hinterachse um eine am Fahrzeugrahmen gelagerte gemeinsame senkrechte Achse einstellbar sind und

Fig. 14            eine Seitenansicht eines Baggerladers mit einer gegenüber Fig. 13 abgeänderten gemeinsamen Schwenklagerung.

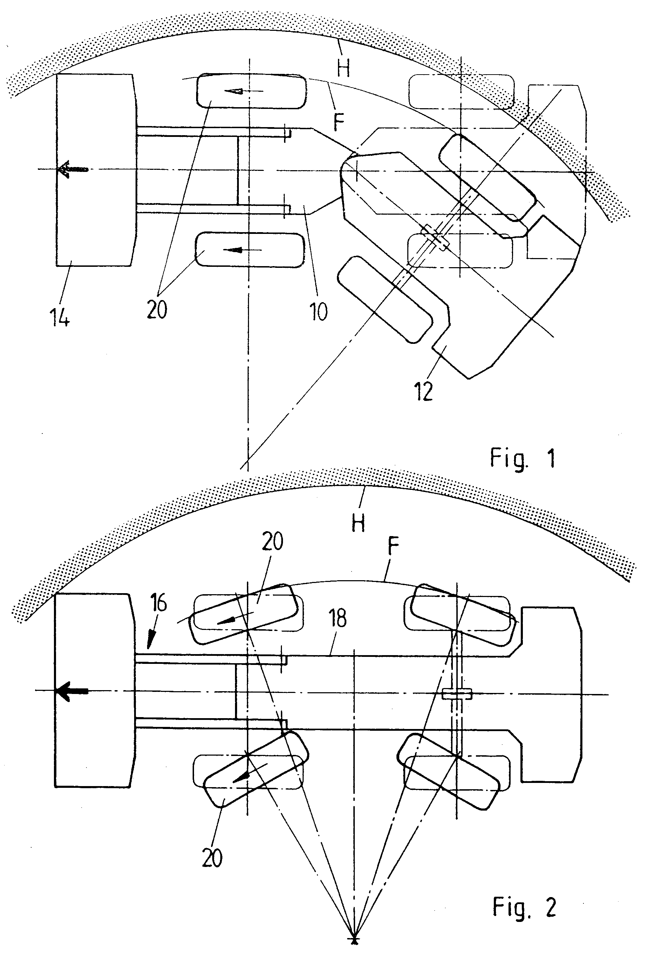

Fig. 1 veranschaulicht durch ein Knickgelenk verbundene Vorder- und Hinterrahmen 10, 12 eines bekannten Knickladers, der gute Schubeigenschaften für die Ladeschaufel 14 auch während des Lenkvorganges aufweist. Die auf die Schaufel wirkende Querkräfte sind gering, weil die Vortriebskräfte der Vorderräder 20 mit der Richtung des Schubwiderstandes der Schaufel weitgehend übereinstimmen. Während des mit ausgezogenen Linien dargestellten Lenkbetriebs ragt die von der Schaufelseite beschriebene Hüllkurve H nur wenig über die Kurve F der äußeren Fahrzeugbegrenzungen hinaus. Nachteilig ist jedoch die in voll eingelenktem Zustand begrenzte Standsicherheit dieses Baufahrzeuges.

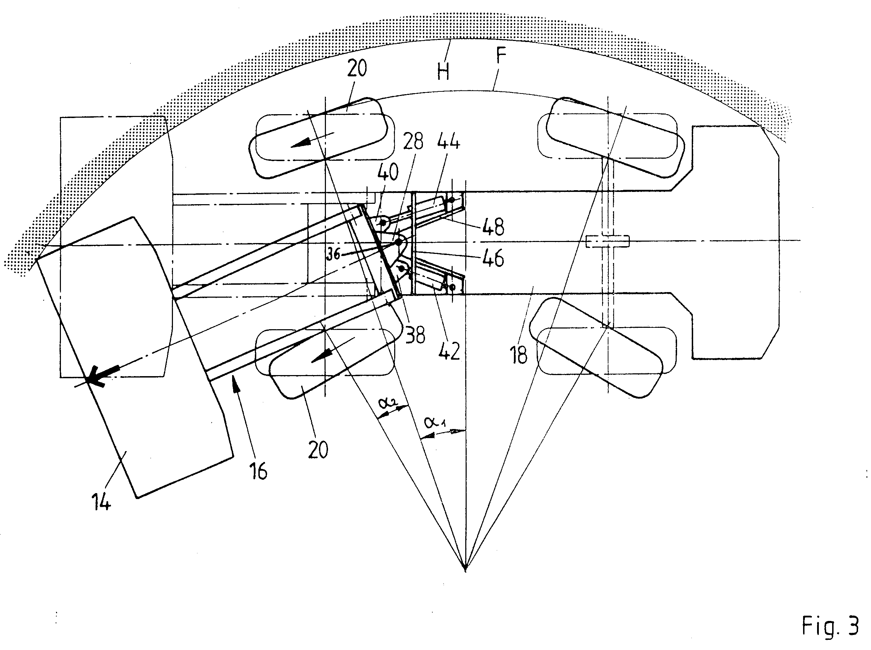

Fig. 2 zeigt ebenfalls als Stand der Technik ein Baufahrzeug als Allradlenker mit einheitlichem Fahrzeugrahmen 18, in dessen Verlängerung eine Schaufel 14 angeordnet ist. Dieser Radladertyp besitzt zwar eine sich während des Lenkbetriebs nicht oder nur wenig verändernde gute Standsicherheit, jedoch in eingelenktem Zustand sehr schlechte Schubeigenschaften, weil dann an der Schaufelschneide ein großer Querschub auftritt. Ungünstig ist außerdem die von der Schaufelseite beschriebene große Hüllkurve H, die über die Fahrzeug-Hüllkurve F weit hinausragt.

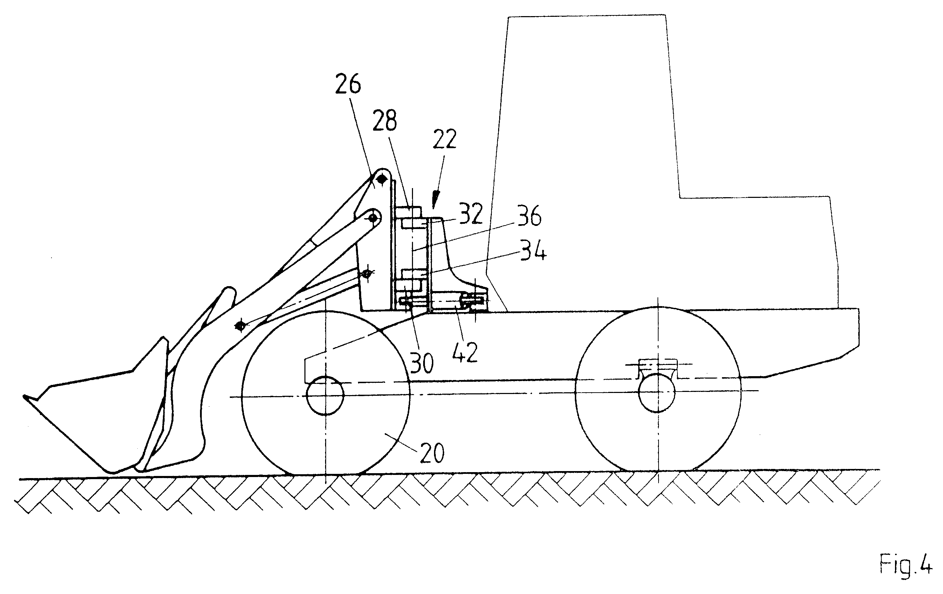

Bei einem Baufahrzeug gemäß der Erfindung sind die vorgenannten Vorteile eines Knicklenkers mit der guten Standsicherheit eines Allradlenkers kombiniert. Dementsprechend ist bei einem Schaufellader gemäß Fig. 3 und 4 im vorderen Bereich des starren Fahrzeugrahmens 18 eine Konsole 22 mit einer auf der Längsmittelachse des Fahrzeugrahmens senkrechten Schwenkachse 36 angeordnet, auf der ein die Schwinge 16 abstützendes Ladegestell 26 nach beiden Seiten schwenkbar gelagert ist. Der seitliche Schwenkwinkel des Ladegestells 26 ist vorzugsweise gleich groß wie der jeweilige mittlere Lenkwinkel $(\alpha_1 + \alpha_2)/2$ der Vorderräder 20.

Das Ladegestell 26 ist mit rückwärtigen oberen und unteren Ansätzen 28, 30 auf der durch vordere Ansätze 32, 34 der Konsole 22 gehaltenen senkrechten Schwenkachse 36 oder einzelnen Bolzen gelagert. Außerdem trägt das Ladegestell 26 gemäß Fig. 3 zwei seitliche Anschlußaugen 38, 40, an denen jeweils ein Kolbenstangenende zweier auf dem Fahrzeugrahmen angebrachter Stellzylinder 42, 44 angelenkt ist. Da die rückwärtigen Anschlußaugen 38, 40 kleine Abstände von der Ladegestell-Mittellinie besitzen, sind nur kurze Verstellzylinder 42, 44 notwendig, um das Ladegestell bis in den größten Lenkeinschlag der Vorderräder einzustellen.

Die auf dem Fahrzeugrahmen 18 feste Konsole 22 besitzt eine senkrechte Querwand 46 mit rückwärtigen Absteifungsblechen 48, an denen sich die Zylinder 42, 44 abstützen, die durch seitliche Ausnehmungen in der Querwand 46 nach vorn ragen.

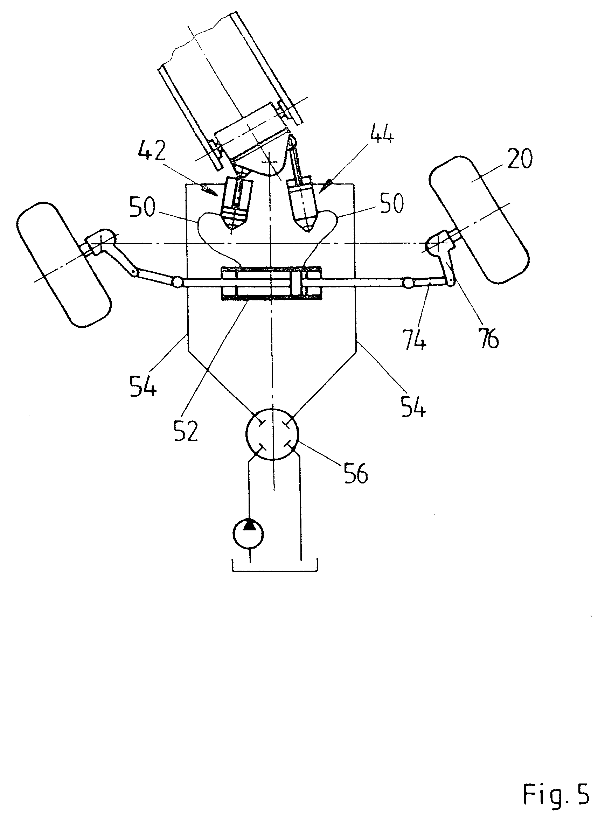

Gemäß einem wichtigen Merkmal der Erfindung kann die Schwenkverstellung des Ladegestells 26 mit der Lenkverstellung der Vorderräder 20 zur Ausführung gleichgroßer Verstellwinkel gekoppelt werden. Dazu sind gemäß Fig. 5 die Verstellzylinder 42, 44 über Hydraulikleitungen 50 an die Enden eines doppelt wirkenden Lenkzylinders 52 und über Hydraulikleitungen 54 an den Drehschieber/Lenkdruckverteiler 56 einer Servolenkung angeschlossen. Die Kolbenstange des parallel zur Vorderachse angeordneten Lenkzylinders 52 ist über Spurstangen 74 mit Spurhebeln 76 der Achsschenkel verbunden, so daß bei einer Lenkbetätigung z.B. nach links gemäß Fig. 5 über den Lenkdruckverteiler 56 Hydrauliköl von der Pumpe dem linken Verstellzylinder 42 zufließt und dessen einfahrender Kolben Öl in den Lenkzylinder 52 drückt, um dessen Kolben nach rechts zu bewegen und die Vorderräder 20 nach links zu lenken. Dabei strömt das aus dem rechten Differentialraum des Lenkzylinders 52 verdrängte Öl in den Verstellzylinder 44, dessen Differentialraum über die Leitung 54 mit dem Ölrücklauf verbunden ist. Selbstverständlich muß das Zylindervolumen des Lenkzylinders 52 mit den Volumina der Verstellzylinder 42, 44 auf der Kolbenseite übereinstimmen, so daß, wenn der Lenkzylinder eine Endlage erreicht hat, auch die Verstellzylinder in Endlage sind.

Anstelle der einer hydraulischen Kopplung sind beliebige andere Kopplungsarten möglich, z.B. zwischen einer mechanisch betätigten Lenkeinrichtung und einem Schwenkantrieb des Ladegestells. Auch eine Entkopplung kann vorgesehen werdend z.B. mit Umschaltventilen zwischen den Leitungen 50 und 54 in Fig. 5, um bei Bedarf nur die Radlenkung zu betätigen oder die Verschwenkung des Ladegestells getrennt steuern zu können.

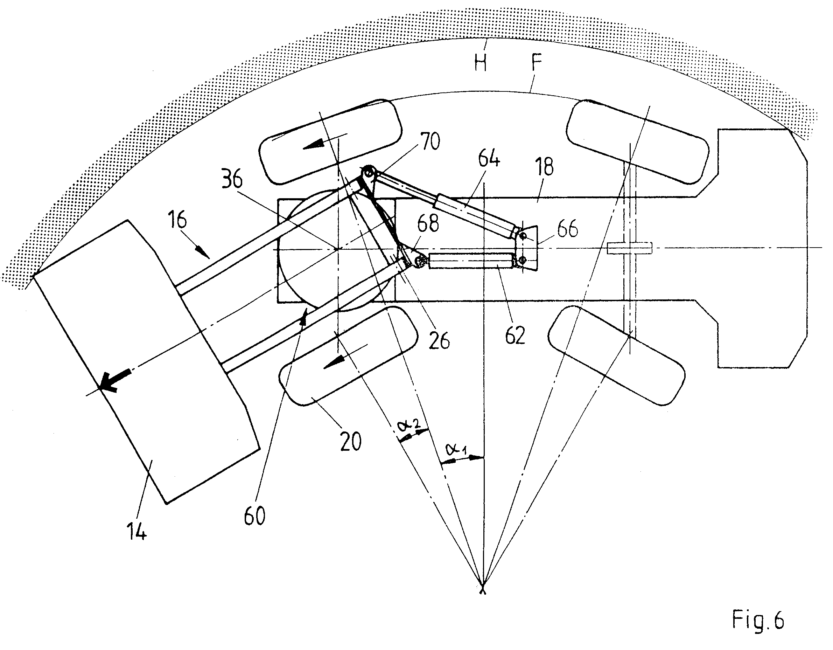

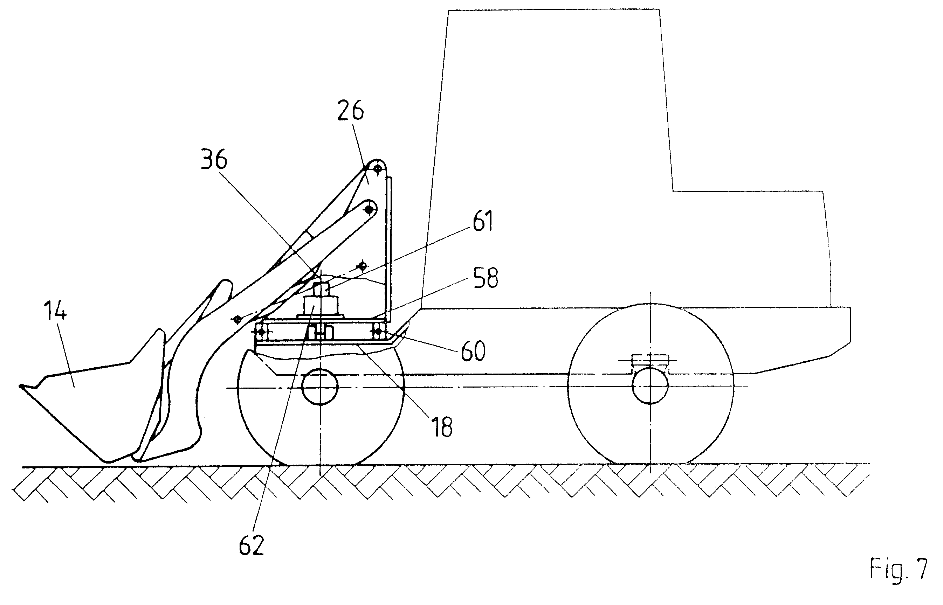

Beim Ausführungsbeispiel gemäß Fig. 6 und 7 ist eine waagerechte Platte 58 des Ladegestells 26 auf einem Drehlager 60 befestigt, das auf einem vertieften, vorderen Ende des Fahrzeugrahmens 18 angebracht ist. Die vor dem Ladegestell 26 angeordnete senkrechte Schwenkachse 36 befindet sich vorzugsweise genau über der Vorderradachse. Gemäß Fig. 7 ist dem Ladegestell ein zentral er Schwenkantrieb zugeordnet, der aus einem Hydraulikmotor 61 und einem Planetengetriebe 62 bestehen kann. Gemäß Fig. 6 dienen als Schwenkantrieb für den Drehkranz 60 zwei Hydraulikzylinder 62, 64, die einenends an einem auf dem Fahrzeugrahmen 18 festen Stützteil 66 und anderenends an Anschlußaugen 68, 70 des Ladegestells 26 angelenkt sind.

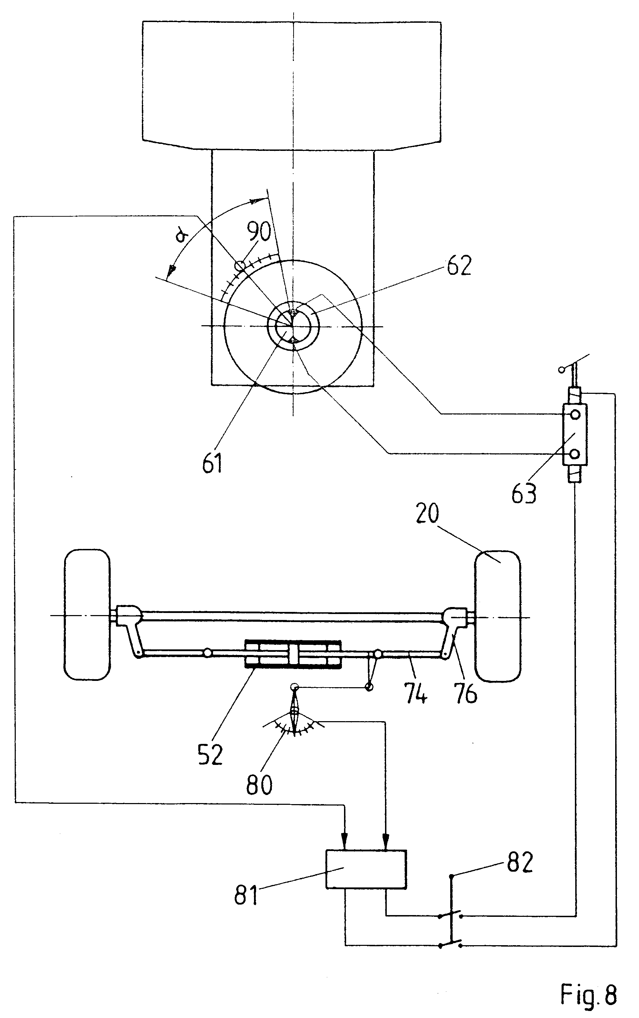

Fig. 8 zeigt eine beispielhafte elektro-hydraulische Kopplung zwischen der Lenkbetätigung und dem Schwenkantrieb des Arbeitsgerätes für ein Baufahrzeug nach Fig. 6 oder 7. Am doppeltwirkenden Lenkzylinder 52 ist z.B. über ein Gestänge ein Wegaufnehmer 80 angeschlossen, der elektrisch mit einem Rechner 81 verbunden ist. Beispielsweise kann am Drelager 60 des Arbeitsgerätes ein Wegaufnehmer 90 angebaut sein, der ebenfalls an den Rechner 81 angeschlossen ist. Wenn das Arbeitsgerät innerhalb des Lenkwinkelbereiches $\alpha$ verschwenkt ist und die Synchronkopplung mit dem Schalter 82 eingeschaltet ist, beeinflußt der Rechner 81 den Hydraulik-Steuerschieber 63 so lange, bis über den Drehmotor 61 und das Getriebe 62 die Richtung der Lenkräder 20 mit der Längsmitte des Arbeitsgerätes übereinstimmt.

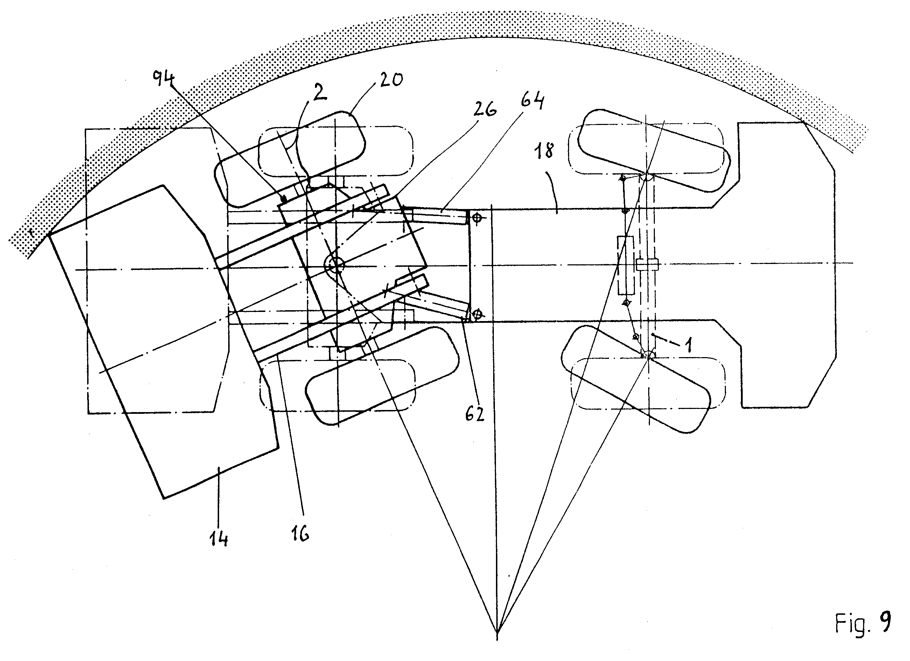

Vom Vorangehenden unterscheiden sich die Ausführungsbeispiele gemäß Fig. 9 bis 14 des Baufahrzeuges nach der Erfindung hauptsächlich dadurch, daß das Arbeitsgerät mit der in seinem Bereich an einem Ende des Fahrzeugrahmens 18 angeordneten Radachse zur gemeinsamen gleichsinnigen Verschwenkung und Lenkverstellung miteinander, nämlich durch eine feste Verbindung gekoppelt sind. Da bei diesem Vorschlag die senkrechte Schwenkachse des Arbeitsgerätes durch den Schnittpunkt der senkrechten Längsmittelebene des Fahrzeugrahmens und der Mittellinie der Radachse verläuft, bildet ein Schwenkantrieb des Arbeitsgerätes gleichzeitig die Lenkeinrichtung für die Radachse, oder eine Lenkeinrichtung bildet gleichzeitig den Schwenkantrieb.

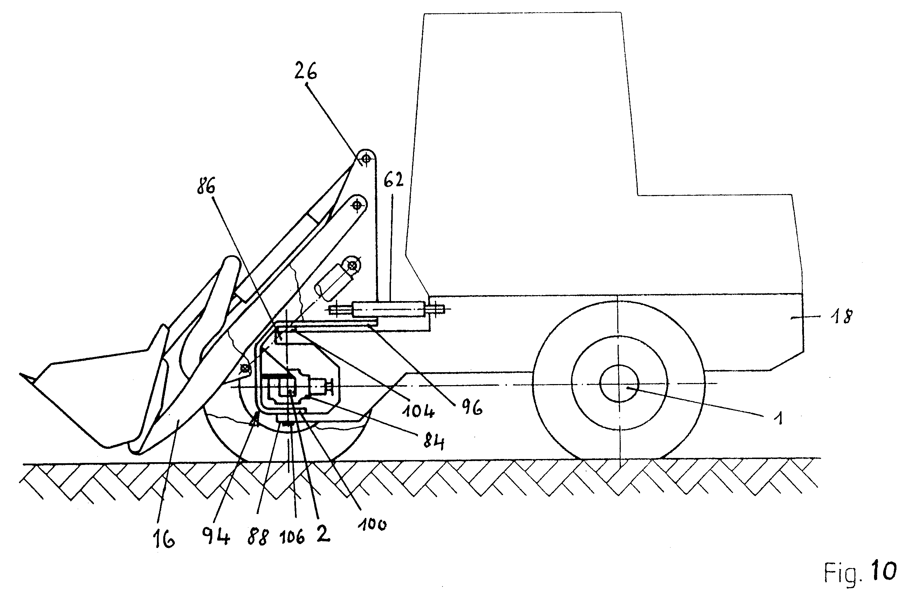

Fig. 9 und 10 zeigen wieder am Beispiel eines Radladers einen einheitlichen Fahrzeugrahmen 18, der durch die Räder zweier Radachsen abgestützt ist, wobei die eine (hintere) Radachse 1 achsschenkelgelenkte Räder trägt und beide Achsen Triebachsen sein können. Die andere Radachse 2 ist als Starrachse mit nicht-lenkbaren Vorderrädern 20 ausgeführt und entsprechend Fig. 10 als Triebachse mit einem mittleren Differentialgetriebe 84 versehen. Die Radachse 2 ist dicht am nach vorn verjüngten Ende des Fahrzeugrahmens 18 angeordnet und dabei innerhalb eines senkrechten Abstandes zwischen oberen und unteren Endteilen 86 bzw. 88 untergebracht.

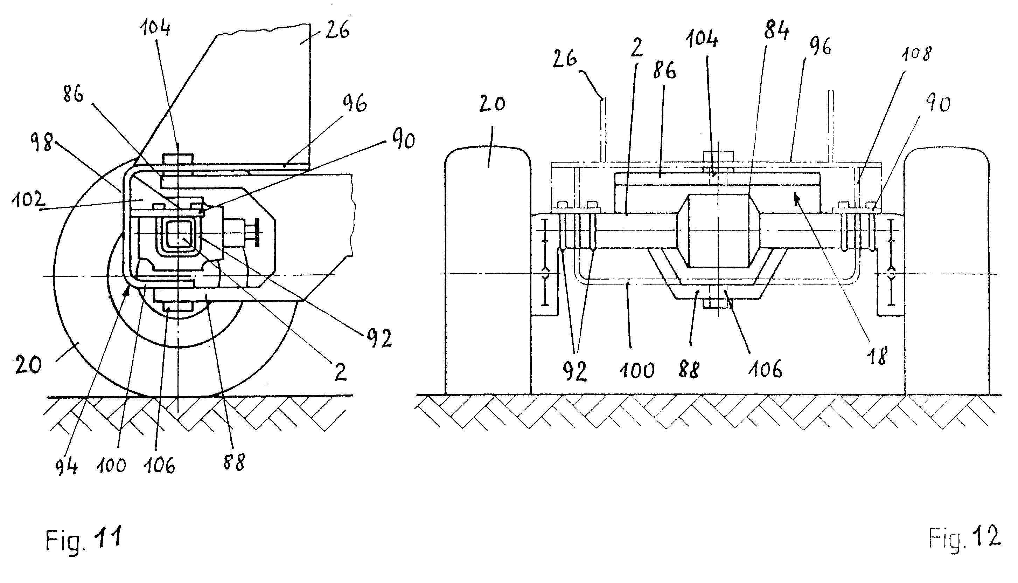

In der gezeigten Positionshöhe steht die Radachse 2 wie in Fig. 11 über jeweils mit Tragteilen 90 verschraubbare Bügel 92 mit einem Anschlußrahmen 94 in fester Verbindung. Der Anschlußrahmen 94 besitzt einen oberen Abschnitt 96, der mit dem Arbeitsgerät/Ladegestell 26 integral verbunden ist. Ein Beispiel für die Abmessungen dieses oberen Abschnittes 96 zeigt Fig. 9 dahingehend, daß er nicht nur das pfeilförmig verjüngte vordere Fahrzeugrahmenende 18 überdeckt, sondern diesen auch seitlich bis hin zu den Rädern 20 überragt, siehe auch Fig. 12. Der Anschlußrahmen 94 enthält außerdem eine im allgemeinen senkrechte Stirnwand 98 und einen daran anschließenden unteren Abschnitt 100 zur Verbindung mit dem unteren nach vorn verjüngten Endteil 88 des Fahrzeugrahmens.

Mindestens zwei Tragteile 90 sind innen an der Stirnwand 98 des Anschlußrahmens 94 angeschweißt und jeweils durch verschweißte Knotenbleche 102 gemäß Fig. 10 und 11 versteift. Zur Montage des mit der Radachse 2 vereinigten Anschlußrahmens 94 wird er über das vordere Ende des Fahrzeugrahmens 18 geschoben, wobei sein oberer Abschnitt 96 auf einem auf dem oberen Endteil 86 sitzenden Knickbolzen 104 gelagert und sein unterer Abschnitt 100, der das untere Endteil 88 überdeckt, auf einem dort befestigten unteren Knickbolzen 106 gelagert ist.

Entsprechend Fig. 12 kann der Anschlußrahmen 94 ein etwa rechteckiges Gehäuse bilden, das an nur einer Seite in Richtung des Fahrzeugrahmens 18 offen ist. Anstelle oder zusätzlich zu den Knotenblechen 100 sind die zur Lastübertragung soweit wie möglich von der Radachsmitte oder dem Differential getriebe 84 entfernten Tragteile 90 mit den oberhalb und unterhalb davon verlaufenden Seitenwänden 108 des Gehäuses verschweißt und versteift. Die Seitenwände enthalten in diesem Fall eine zur Aufnahme der Radachse 2 zugängliche Ausnehmung.

Wenn Bedarf besteht, die gemäß Fig. 10 durch das am Fahrzeugrahmen nach unten versetzte Endteil 86 entstehende Beschränkung der Bodenfreiheit unter dem unteren Knickbolzen 106 zu vergrößern, ist die Radachse 2 entsprechend Fig. 11 und 12 als eine Portalachse ausgebildet, deren Differentialgetriebe 84 oberhalb der Radmitte liegt. Dadurch besitzt der untere Knickbolzen 106 mindestens einen gleichgroßen Bodenabstand wie das mittlere Getriebegehäuse einer Normalachse.

Mit Hilfe der einerseits am Fahrzeugrahmen und andererseits seitlich am Ladegestell 26 angelenkten Hydraulikzylinder 62, 64 wird somit die Radachse 2 gelenkt und gleichzeitig das Ladegestell entsprechend Fig. 9 im gleichen Winkel um den gemeinsamen Knickbolzen 104, 106 verschwenkt.

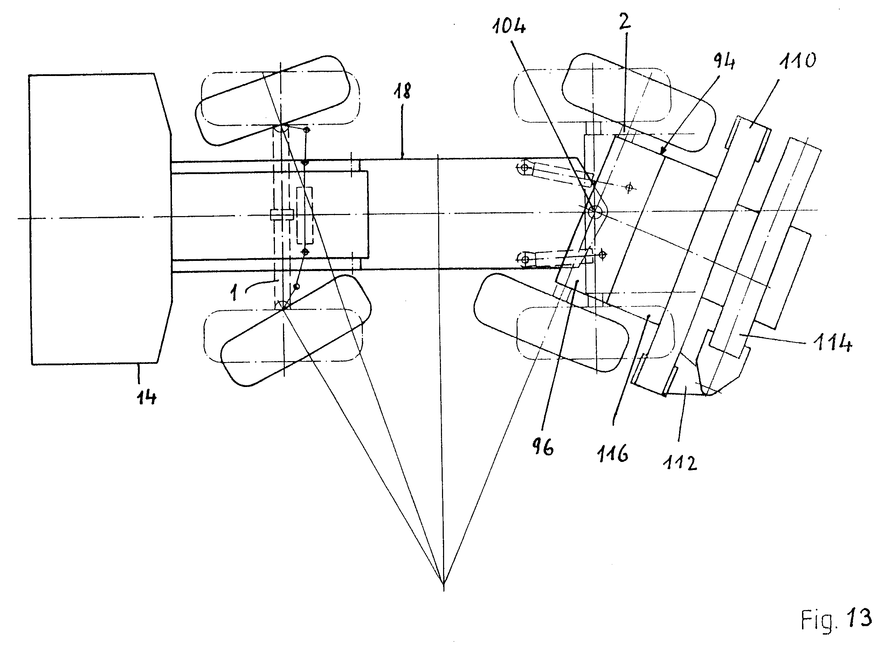

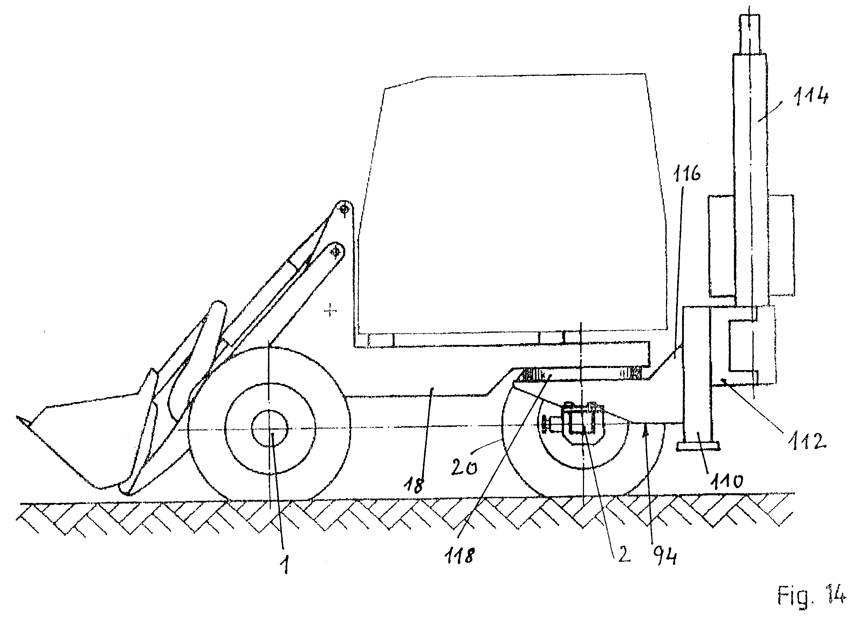

In Fig. 13 und 14 ist die gekoppelte bzw. kombinierte Schwenkung von Radachse und Arbeitsgerät für einen Heckbagger eines Baggerladers gezeigt und kann als Umkehrung des Prinzips von Fig. 9 am rückwärtigen Fahrzeugende aufgefaßt werden. Das Traggestell 110, das hierbei mit Horizontalführungen zur Querverschiebung der Konsole 112 für einen schwenkbaren Baggerausleger 114 enthält, ist mittels einer über den Umfang der Räder 20 hinausragenden Abschnitt des Anschlußrahmens 94 fest verbunden, der vorzugsweise von der Stirnseite 98 ausgeht. Die Ausgestaltung des Anschlußrahmens, seines Schwenkantriebes und seiner festen Verbindung mit der Radachse 2 können mit denen in Fig. 9 identisch sein. Auf diese Weise läßt sich der normalerweise 180° betragende Schwenkbereich des Auslegers 114 durch den jeweils eingestellten Lenkwinkel an der Radachse 2 nach rechts oder links beträchtlich vergrößern, um damit z.B. einen Lastwagen besser beladen zu können usw.

Bei der in Fig. 14 dargestellten Variante des Heckbaggers nach Fig. 13 ist die Radachse 2 wie zuvor mit dem am Traggestell 110 integralen Anschlußrahmen 94 fest verbunden. Der Anschlußrahmen 94 ist an seiner Oberseite mittels eines ringförmigen Drehlagers 118, das zentrisch die senkrechte Schwenkachse bildet, an den Fahrzeugrahmen 18, vorzugsweise an dessen Unterseite angeschlossen. Der Anschlußrahmen 94 besitzt einen in seiner Länge etwa dem Durchmesser des Drehlagers 118 entsprechenden ersten Abschnitt, der wie zuvor Befestigungsmittel für die Radachse 2 aufweist, und ist an seinem über das Ende des Fahrzeugrahmens vorstehenden Abschnitt erweitert und zur Aufnahme der vom Heckbagger aufzunehmenden Kräfte entsprechend versteift. Aufgrund des Drehlagers 118 mit ausreichend großem Durchmesser und der daran mittels des Anschlußrahmens befestigten Radachse entstehen kräftemäßig und baulich günstige Abstützbedingungen, und außerdem ist eine große Bodenfreiheit unter der Radachse 2 gewährleistet. Die Lagerung und Abstützung des Anschlußrahmens 94 auf dem Fahrzeugrahmenende mit Hilfe eines dort angeordneten Drehkranzes wie in Fig. 14 kann auch für andere Arbeitsgeräte benutzt werden.

**Patentansprüche**

1. Baufahrzeug, mit einem einheitlichen Fahrzeugrahmen (18) und zwei Radachsen, von denen mindestens die eine achsschenkelgelenkte Räder aufweist, und mit einem durch den Fahrzeugrahmen (18) im Bereich der anderen Radachse abgestützten Arbeitsgerät, z.B. Ladegestell für eine mit einem Ladewerkzeug versehene Hubschwinge oder Traggestell für die Auslegerkonsole eines Heckbaggers
**dadurch gekennzeichnet**,
daß das Arbeitsgerät um eine auf dem Fahrzeugrahmen gelagerte senkrechte Schwenkachse (36) einstellbar
und mindestens mittelbar mit einer Lenkeinrichtung für die Räder der anderen Radachse durch Kopplungsmittel zum Einstellen gleichgerichteter, gleichgroßer Schwenk- bzw. Lenkeinschlagwinkel verbunden ist.

2. Baufahrzeug nach Anspruch 1, dadurch gekennzeichnet, daß die andere Radachse ebenfalls achsschenkelgelenkte Räder trägt, und daß die Kopplungsmittel eine hydraulische Folgesteuerung zwischen einem Servo-Verstellzylinder (52) der Lenkeinrichtung und einem hydraulisch betätigten Schwenkantrieb des Arbeitsgerätes aufweisen.

3. Baufahrzeug nach Anspruch 1 oder 2, dadurch gekennzeichnet, daß der Schwenkantrieb zwei am Arbeitsgerät sowie am Fahrzeugrahmen (18) angelenkte und beiderseits von dessen Längsmittelachse angeordnete Zylinder (42, 44) aufweist.

4. Baufahrzeug nach Anspruch 3, dadurch gekennzeichnet, daß beide Schwenkzylinder (42, 44) jeweils durch beidseitige Anschlußleitungen (50, 54) mit einem Drehschieber (56) und mit je einer Seite des eine durchgehende Kolbenstange aufweisenden Servo-Verstellzylinders (52) der Lenkeinrichtung verbunden sind.

5. Baufahrzeug nach einem der vorhergehenden Ansprüche, dadurch gekennzeichnet, daß das Arbeitsgerät (26) mittels rückwärtiger Anschlußteile (28, 30) auf der an einer auf dem Rahmen (18) festen Drehkonsole (22) gehaltenen senkrechten Schwenkachse (36) gelagert ist.

6. Baufahrzeug nach einem der vorhergehenden Ansprüche, dadurch gekennzeichnet, daß die Drehkonsole (22) eine auf dem Rahmen (18) feste senkrechte Querwand (46) und rückwärtig daran anschließende Versteifungsplatten (48) aufweist, an denen die Zylinder (42, 44) für das Arbeitsgerät bzw. Ladegestell (26) angelenkt sind.

7. Baufahrzeug nach einem der Ansprüche 1 bis 4, dadurch gekennzeichnet, daß das Arbeitsgerät als Ladegestell (26) auf einem am Fahrzeugrahmen (18) im Bereich oberhalb der Vorderachse gelagerten Drehkranz (60) angeordnet ist, dessen senkrechte Schwenkachse (36) vor dem Ladegestell und zwischen den Schwingenarmen des Hubrahmens (16) liegt.

8. Baufahrzeug nach Anspruch 1 oder 7, dadurch gekennzeichnet, daß ein der Lenkverstellung der Räder der anderen Radachse folgender Winkeloder Wegaufnehmer (80) sowie ein der Schwenkverstellung des Arbeitsgeräts folgender Winkeloder Wegaufnehmer (90) an eine einen Vergleichsrechner enthaltende Synchronverstelleinrichtung angeschlossen sind, die zwecks von der Lenkverstellung unabhängiger Schwenkung des Arbeitsgeräts bzw. Ladegestells (26) mittels eines Schalters (82) abschaltbar ist.

9. Baufahrzeug nach Anspruch 1, dadurch gekennzeichnet, daß die Kopplungsmittel eine zwischen dem Arbeitsgerät und der an einem Fahrzeugrahmenende angeordneten, nicht-lenkbare Räder tragenden anderen Radachse feste Verbindung aufweisen, in der die senkrechte Schwenkachse (36) durch den Schnittpunkt von Längsmitte des Fahrzeugrahmens (18) und Mittellinie der Radachse verläuft, so daß der Schwenkantrieb des Arbeitsgerätes gleichzeitig die Lenkeinrichtung der anderen Radachse bzw. und umgekehrt bildet.

10. Baufahrzeug nach Anspruch 9, dadurch gekennzeichnet, daß die andere Radachse mit einem am Arbeitsgerät integralen Anschlußrahmen (94) fest verbunden ist, der mittels eines oberen und eines unteren Abschnittes (96, 100) auf einem am Fahrzeugrahmenende angeordneten Knickbolzen gelagert ist, der die senkrechte Schwenkachse bildet.

11. Baufahrzeug nach Anspruch 9 oder 10, dadurch gekennzeichnet daß die Radachse innerhalb eines senkrechten Abstandes zwischen oberen und unteren waagerechten Endteilen (86, 88) des Fahrzeugrahmens (18) angeordnet ist, die einen oberen und einem unteren Knickbolzen (104, 106) zur Lagerung der oberen und unteren Abschnitte (96, 100) des Anschlußrahmens tragen.

12. Baufahrzeug nach einem der Ansprüche 9 bis 11. dadurch gekennzeichnet, daß der Anschlußrahmen (94) aus einem etwa rechteckigen, mindestens an einer Seite offenen Gehäuse besteht, das innere versteifte Tragteile (90) zur Montage der Radachse enthält und mit seinen oberen und unteren Abschnitten (96, 100) auf den Knickbolzen der oberen und unteren Endteile (86, 88) des Fahrzeugrahmens gelagert ist.

13. Baufahrzeug nach einem der Ansprüche 9 bis 12, dadurch gekennzeichnet, daß die andere Radachse als Triebachse vorzugsweise als getriebene Portalachse mit einem Differentialgetriebe (84) ausgeführt ist, das innerhalb des senkrechten Abstands zwischen den oberen und unteren Knickbolzen (104, 106) an den oberen bzw. unteren Endteilen (86, 88) des Fahrzeugrahmens angeordnet ist.

14. Baufahrzeug nach Anspruch 9, dadurch gekennzeichnet, daß die andere Radachse mit einem am Arbeitsgerät integralen Anschlußrahmen fest verbunden ist, der nach oben mittels eines ringförmigen Drehlagers mit senkrechter Schwenkachse an den Fahrzeugrahmen angeschlossen ist.

15. Baufahrzeug nach Anspruch 9 oder 14, dadurch gekennzeichnet, daß der Anschlußrahmen auf einem in seiner Breite mindestens dem Durchmesser des Drehlagers entsprechenden Abschnitt untere Befestigungsmittel für die andere Radachse aufweist und an einem über das Ende des Fahrzeugrahmens vorstehenden Abschnitt das Arbeitsgerät, z.B. das Traggestell für die Auslegerkonsole eines Heckbaggers trägt.

**Claims**

1. Construction vehicle comprising an integral vehicle frame (18) and two wheel axles, at least one of which having wheels steerable by steering knuckles, and comprising a working implement supported by the vehicle frame (18) within the zone of the other wheel axle, for example loader chassis for a lifting frame having a loading tool, or support frame for the boom bracket of a backhoe excavator, **characterized in** that the working implement is adjustable about a vertical pivot axis (36) mounted on the vehicle frame and is at least indirectly connected to a steering device for the wheels of the other wheel axle by means of coupling means for adjustment of pivot or steering angles of same direction and magnitude.

2. Construction vehicle according to claim 1, characterized in that the other wheel axle also carries wheels steerable by steering knuckles, and in that the coupling means comprise a hydraulic follower control between an adjustment servo-cylinder (52) of the steering device and a hydraulically operated pivot drive of the working implement.

3. Construction vehicle according to claim 1 or 2, characterized in that the pivot drive comprises two cylinders (42, 44) articulated to the working implement and to the vehicle frame (18) and disposed at both sides of the longitudinal center axis thereof.

4. Construction vehicle according to claim 3, characterized in that both pivot cylinders (42, 44) are each connected at both ends by connection pipes (50, 54) to a rotary valve (56) and to one end, respectively, of the adjustment servo-cylinder (52) of the steering device having a passing-through piston rod.

5. Construction vehicle according to one of the preceding claims, characterized in that the working implement (26) by means of rearwardly extending connecting members (28, 30) is pivotally mounted about the vertical pivot axis (36) supported on a pivot bracket (22) fixedly secured to the frame (18).

6. Construction vehicle according to one of the preceding claims, characterized in that the pivot bracket (22) comprises a vertical cross wall (46) fixed to the frame (18) and rearwardly projecting stiffening plates (48), to which the cylinders (42, 44) acting on the working implement or loader chassis (26) are articulated.

7. Construction vehicle according to one of the claims 1 to 4, characterized in that the working implement forming the loader chassis (26) is arranged on a slewing track ring (60) supported by the vehicle frame (18) in the zone above the front axle, the vertical pivot axis (36) of which ring being disposed forwardly of the loader chassis and between the arms of the lifting frame (16).

8. Construction vehicle according to claim 1 or 7, characterized in that an angle or path sensor (80) measuring the steering adjustment of the wheels of the other wheel axle and an angle or path sensor (90) measuring the pivotal adjustment of the working implement are connected to a synchronizing adjustment device including a computerized comparator adapted to be disconnected by means of a switch (82) in order to achieve swivelling of the working implement or loader chassis (26) independent from steering adjustment.

9. Construction vehicle according to claim 1, characterized in that the coupling means comprise a fixed connection between the working implement and the other wheel axle carrying non-steerable wheel and disposed at one end of the vehicle frame, wherein the vertical pivot axis (36) extends through the point of intersection between the longitudinal center line of the vehicle frame (18) and the center line of the wheel axle, such that the pivot drive of the working implement at the same time constitutes the steering device of the other wheel axle and vize versa, respectively.

10. Construction vehicle according to claim 9, characterized in that the other wheel axle is fixedly secured to a connecting frame (94) integral with the working implement, which by means of an upper and a lower section (96, 100) is pivotally mounted to an articulation shaft disposed at the vehicle frame's end and forming the vertical pivot axis.

11. Construction vehicle according to claim 9 or 10, characterized in that the wheel axle is disposed within a vertical distance between upper and lower horizontal end members (86, 88) of the vehicle frame, which carry an upper and a lower articulation shaft fo mounting the upper and lower sections (96, 100) of the connection frame.

12. Construction vehicle according to one of the claims 9 to 11, characterized in that the connection frame (94) consists of an about rectangular housing open at least at one side thereof and including inner braced supporting members (90) for mounting the wheel axle and with its upper and lower sections (96, 100) being pivotally mounted to the articulation shafts of the upper and lower end members (86, 88) of the vehicle frame.

13. Construction vehicle according to one of the claims 9 to 12, characterized in that the other wheel axle is a drive axle preferably in the form of a driven gantry axle having a differential gear (84), which is disposed within the vertical spacing between the upper and lower articulation shafts (104, 106) associated to the upper and lower end members (86, 88), respectively, of the vehicle frame.

14. Construction vehicle according to claim 9, characterized in that the other wheel axle is fixedly secured to a connection frame integral with the working implement and at its upper side being connected to the vehicle frame by means of an annular pivot bearing having a vertical pivot axis.

15. Construction vehicle according to claim 9 or 14, characterized in that the connection frame on a section having a width at least corresponding to the diameter of the pivot bearing comprises lower fixation means for the other wheel axle, and at a section projecting beyond the end of the vehicle frame carries the working implement, the support frame for the boom bracket of a rearwardly disposed excavator, for example.

## Revendications

1. Véhicule de chantier comprenant un châssis de véhicule (18) monobloc et deux essieux, dont l'un au moins présente des roues dirigées par des fusées d'essieux, et un instrument de travail soutenu par le châssis de véhicule (18) dans la zone de l'autre essieu, par exemple un bâti de chargement pour un cadre de levage pourvu d'un outil de chargement ou un bâti support pour la console de bras d'une pelleteuse arrière, caractérisé en ce que l'instrument de travail est réglable autour d'un axe de pivotement vertical (36) porté sur le châssis du véhicule et relié au moins indirectement avec un dispositif de direction pour les roues de l'autre essieu par des moyens d'accouplement en vue de l'obtention d'angles de pivotement ou de changement de direction de même orientation et de même grandeur.

2. Véhicule de chantier selon la revendication 1, caractérisé en ce que l'autre essieu porte également des roues dirigées par des fusées d'essieu et en ce que les moyens d'accouplement comportent une commande de poursuite hydraulique entre un cylindre à déplacement asservi (52) de la direction et un entraînement en pivotement à actionnement hydraulique de l'instrument de travail.

3. Véhicule de chantier selon la revendication 1 ou 2, caractérisé en ce que l'entraînement en pivotement comporte deux cylindres (42, 44) articulés sur l'instrument de travail et sur le châssis de véhicule (18) et disposés des deux côtés de l'axe longitudinal médian de celui-ci.

4. Véhicule de chantier selon la revendication 3, caractérisé en ce que les deux cylindres de pivotement (42, 44) sont reliés chacun par des conduites de raccordement bilatérales (50, 54) à une vanne rotative (56) et chacun avec un côté du cylindre à déplacement asservi (52) de la direction, qui présente une tige de piston continue.

5. Véhicule de chantier selon l'une des revendications précédentes, caractérisé en ce que l'instrument de travail (26) est supporté au moyen de pièces de raccordement arrière (28, 30) sur l'axe de pivotement vertical (36) qui est maintenu sur l'une des consoles rotatives (22) fixées sur le châssis (18).

6. Véhicule de chantier selon l'une des revendications précédentes, caractérisé en ce que la console rotative (22) présente une paroi transversale verticale (46) fixée au châssis (18) et de plaques raidisseuses (48) qui se raccordent à celle-ci sur l'arrière et sur lesquelles sont articulés les cylindres (42, 44) destinés à l'instrument de travail ou au bâti de chargement (26).

7. Véhicule de chantier selon l'une des revendications 1 à 4, caractérisé en ce que l'instrument de travail est disposé sous la forme d'un bâti de chargement (26) sur une couronne rotative (60) supportée sur le châssis de véhicule (18) dans la zone située au-dessus de l'essieu avant et dont l'axe de pivotement vertical (36) se trouve devant le bâti de chargement et entre les bras de bascule du cadre de levage (16).

8. Véhicule de chantier selon la revendication 1 ou 7, caractérisé en ce qu'un capteur d'angle ou de distance (80) qui suit le changement de direction des roues de l'autre essieu et un capteur d'angle ou de distance (90) qui suit le mouvement pivotant de l'instrument de travail sont raccordés à une installation de déplacement synchrone contenant un calculateur comparateur, qui peut être déconnectée au moyen d'un interrupteur (82) en vue du guidage d'un pivotement indépendant de l'instrument de travail ou bâti de chargement (26).

9. Véhicule de chantier selon la revendication 1, caractérisé en ce que les moyens d'accouplement comprennent une liaison fixe entre l'instrument de travail et l'autre essieu disposé à une extrémité du châssis de véhicule et portant des roues non directrices, dans laquelle l'axe de pivotement vertical (36) passe par l'intersection de l'axe longitudinal médian du châssis de véhicule (18) et la ligne médiane de l'essieu, de sorte que l'entraînement pivotant de l'instrument de travail représente en même temps le dispositif de direction de l'autre essieu et inversement.

10. Véhicule de chantier selon la revendication 9, caractérisé en ce que l'autre essieu est fixé à un cadre de raccordement (94) solidaire de l'instrument de travail, qui est supporté au moyen d'une section supérieure et d'une section inférieure (96, 100) sur un boulon de flambage qui est disposé à l'extrémité du châssis du véhicule et qui forme l'axe de pivotement vertical.

11. Véhicule de chantier selon la revendication 9 ou 10, caractérisé en ce que l'essieu est disposé à l'intérieur d'un intervalle vertical entre les parties d'extrémité horizontales supérieure et inférieure (86, 88) du châssis de véhicule (18), qui portent des boulons de flambage supérieur et inférieur (104, 106) en vue de supporter des sections supérieure et inférieure (96, 100) du cadre de raccordement.

12. Véhicule de chantier selon l'une des revendications 9 à 11, caractérisé en ce que le cadre de raccordement (94) se compose d'un boîtier approximativement rectangulaire, ouvert sur au moins un côté, qui contient des pièces portantes intérieures raidies (90) en vue du montage de l'essieu et qui est supporté par ses sections supérieure et inférieure (96, 100) sur les boulons de flambage des parties d'extrémité supérieure et inférieure (86, 88) du châssis de véhicule.

13. Véhicule de chantier selon l'une des revendications 9 à 12, caractérisé en ce que l'autre essieu est conçu comme un essieu moteur, de préférence comme un essieu portique avec un engrenage différentiel (84), qui est disposé sur les parties d'extrémité supérieure et inférieure (86,88) du châssis de véhicule à l'intérieur de l'intervalle vertical entre les boulons de flambage supérieur et inférieur (104, 106).

14. Véhicule de chantier selon la revendication 9, caractérisé en ce que l'autre essieu est fixé à un cadre de raccordement solidaire de l'instrument de travail, qui est raccordé vers le haut au châssis du véhicule au moyen d'un palier de pivotement annulaire à axe de pivotement vertical.

15. Véhicule de chantier selon la revendication 9 ou 14, caractérisé en ce que le cadre de raccordement présente, sur une section dont la largeur correspond au moins au diamètre du palier de pivotement, des moyens de fixation inférieurs pour l'autre essieu et porte sur une partie faisant saillie au-delà de l'extrémité du châssis du véhicule, l'instrument de travail, par exemple le bâti support pour la console de bras d'une pelleteuse arrière.

Fig. 1

Fig. 2

Fig. 3

Fig. 4

Fig. 5

Fig.6

EP 0 638 471 B1

Fig. 7

EP 0 638 471 B1

Fig. 8

Fig. 9

Fig. 10

Fig. 11

Fig. 12

EP 0 638 471 B1

Fig. 13

EP 0 638 471 B1

Fig. 14